(19) Europäisches Patentamt / European Patent Office / Office européen des brevets

(11) **EP 3 506 174 B1**

(12) **FASCICULE DE BREVET EUROPEEN**

(45) Date de publication et mention
de la délivrance du brevet:
**31.05.2023 Bulletin 2023/22**

(21) Numéro de dépôt: **18306871.7**

(22) Date de dépôt: **28.12.2018**

(51) Classification Internationale des Brevets (IPC):
**G06N 3/08** *(2023.01)* **H04L 25/03** *(2006.01)*

(52) Classification Coopérative des Brevets (CPC):
**G06N 3/084; H04L 25/03331**

(54) **SYSTÈME DE DÉMODULATION OU DE RECHERCHE EN AVEUGLE DES CARACTÉRISTIQUES DE SIGNAUX DE TÉLÉCOMMUNICATION NUMÉRIQUE**

SYSTEM ZUR DEMODULATION ODER BLINDSUCHE DER EIGENSCHAFTEN VON DIGITALEN TELEKOMMUNIKATIONSSIGNALEN

SYSTEM FOR DEMODULATION OR BLIND SEARCH OF THE CHARACTERISTICS OF DIGITAL TELECOMMUNICATIONS SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2017 FR 1701417**

(43) Date de publication de la demande:
**03.07.2019 Bulletin 2019/27**

(73) Titulaire: **Avantix**
**13794 Aix-en-Provence (FR)**

(72) Inventeur: **COURTAT, Thomas**
**75014 PARIS (FR)**

(74) Mandataire: **IPAZ**
**Bâtiment Platon**
**Parc Les Algorithmes**
**91190 Saint-Aubin (FR)**

(56) Documents cités:
**EP-A1- 0 372 613** **FR-A1- 3 030 964**
**US-A1- 2013 216 005**

- **TREICHLER J R ET AL: "Practical implementations of blind demodulators", SIGNALS, SYSTEMS & COMPUTERS, 1997. CONFERENCE RECORD OF THE THIRTY-FI RST ASILOMAR CONFERENCE ON PACIFIC GROVE, CA, USA 2-5 NOV. 1997, LOS ALAMITOS, CA, USA,IEEE COMPUT. SOC, US, 2 novembre 1997 (1997-11-02), page 1028, XP032140332, DOI: 10.1109/ACSSC.1997.679062 ISBN: 978-0-8186-8316-9**
- **JOHN R TREICHLER ET AL: "Practical Blind Demodulators for High-Order QAM Signals", PROCEEDINGS OF THE IEEE, IEEE. NEW YORK, US, vol. 86, no. 10, 1 octobre 1998 (1998-10-01), XP011044107, ISSN: 0018-9219**

**Description**

DOMAINE TECHNIQUE DE L'INVENTION

La présente invention concerne généralement un système de traitement de signaux en télécommunications numériques, et notamment un système de recherche éventuellement en aveugle des caractéristiques de signaux de télécommunication mono-polarisés, bipolarisés ou multipolarisés.

ARRIERE-PLAN TECHNOLOGIQUE DE L'INVENTION

En télécommunications numériques, un émetteur cherche à transmettre une suite de bits d'information à un (ou plusieurs) récepteur(s). L'émetteur effectue une suite d'opérations de codage afin de rendre possible la transmission de l'information sur un support physique que l'on appelle aussi canal de propagation (tel qu'une fibre optique, ou tel qu'est plus particulièrement le cas ici, par propagation non contrainte dans l'espace). Ce canal de propagation n'est, généralement, pas parfait dans le sens où le signal reçu n'est pas une réplique exacte du signal émis (perturbations thermiques, réverbérations, dispersion). Au niveau de l'émetteur, on se donne une constellation ( « Amplitude-shift keying » ASK ou modulation par déplacement d'amplitude est une forme de modulation d'amplitude qui représente les données numériques en tant que variations de l'amplitude d'une onde porteuse ; « Phase-shift keying » M-PSK ou modulation par changement de phase désignant une famille de formes de modulations numériques qui ont toutes pour principe de véhiculé de l'information binaire via la phase d'un signal de référence ; « Quadrature amplitude modulation » M-QAM ou modulation d'amplitude en quadrature est à la fois un schéma numérique et analogique qui transmet deux signaux de messages analogiques ou deux flux binaires numériques, en modifiant/modulant les amplitudes de deux ondes porteuses, en utilisant le schéma de modulation ASK ou le modèle de modulation analogique) qui est un ensemble fini de symboles dans le plan complexe et une fonction qui à nombre défini de bits consécutifs associant un symbole de la constellation. Chaque symbole de la suite est multiplié par une forme d'onde continue (ou filtre de mise en forme), décalée dans le temps pour former le signal en bande de base. Ce signal en bande de base est transposé à une certaine fréquence, dite fréquence porteuse, puis émis par une interface radio (une antenne dans le cas d'une transmission sans fil). A la réception, on effectue les opérations inverses pour reconstituer les bits d'information à partir du signal mesuré sur l'interface radio. Notamment, la démodulation est l'opération qui identifie à la réception les symboles effectivement émis par l'émetteur à partir du signal reçu.

On parle de démodulation aveugle dès qu'un des paramètres de la transmission est inconnu de l'émetteur. En télécommunications coopératives, la plupart des paramètres sont définis par contrat entre l'émetteur et le récepteur (fréquence de porteuse, type de constellation, décalage temporel entre les formes d'onde, puissance d'émission). Les seules inconnues qui subsistent sont d'éventuelles erreurs de synchronisation et l'effet du canal de propagation. Ces paramètres sont, en général, estimés par émission régulière de séquences, dites pilotes connues des deux parties. L'opération compensant les effets du canal avant démodulation est appelée égalisation.

En télécommunications non coopératives en revanche, l'intégralité des paramètres est inconnue, ou connue en ordre de grandeur seulement, et il n'y a pas de séquences pilotes pour faciliter l'égalisation.

Un des buts du brevet FR3030964 est de proposer des méthodes permettant de séparer et de démoduler en aveugle deux signaux numériques stables numériquement et utilisant un algorithme d'espérance maximisation. Cependant, une telle méthode est encore trop demandeuse en temps de calcul pour pouvoir suivre en temps réel un signal. Par ailleurs, ce document ne s'applique qu'à une seule voie.

Le brevet US8605828 propose un mécanisme aveugle pour la démodulation de signaux QPSK décalé en présence d'une erreur de phase porteuse

Ledit document enseigne un mécanisme de démodulation en aveugle d'un signal de télécommunication spécifique à l'estimation et à la correction du décalage de la phase porteuse. Cependant la méthode ne permet pas une correction de plusieurs paramètres ni une structure le permettant.

Les documents « Practical Blind Demodulators for High-Order QAM signais » de JOHN R TREICHLER et al., et « Pratical Implementations of Blind demodulators » de TREICHLER J R et al. décrivent des techniques de démodulation en aveugle des caractéristiques d'un signal de télécommunication numérique.

DESCRIPTION GENERALE DE L'INVENTION

La présente invention a pour but de pallier certains inconvénients de l'art antérieur en proposant un système permettant d'optimiser et de faciliter la recherche, éventuellement en aveugle, des caractéristiques de signaux de télécommunication mono-polarisés, bipolarisés ou multipolarisés permettant une implémentation en temps réel.

A cet effet, la présente invention concerne un système, non revendiqué, de démodulation ou de recherche en aveugle des caractéristiques de signaux de télécommunication numérique, à partir de l'observation par échantillonnage d'un signal comprenant des paramètres comprenant notamment les coefficients d'égalisation, la valeur de la phase ($\varphi$), l'amplitude du signal, leur fréquence et leur temps symbole, caractérisé en ce qu'il comprend au moins une architecture hardware ou hardware et firmware comportant des mémoires et une ou plusieurs unités de traitement pour implémenter un réseau de blocs de calcul spécifiques connectés les uns aux autres, dont

- un premier bloc spécialisé du réseau réalise l'estimation d'au moins un filtre permettant d'acquérir le signal en aveugle et
- puis un second bloc réalise au moins un module permettant d'estimer l'amplification des signaux observés pour évaluer par la suite les autres caractéristiques des signaux observés par les autres blocs de calcul du réseau,
- au moins un troisième bloc de calcul spécialisé réalise un module de décision pour calculer un signal d'erreur et rétro-propager les erreurs calculées à chacun des blocs résiduels (« propagate », « update ») précédents.

Selon une autre particularité, le système comporte un bloc supplémentaire spécialisé relié aux sorties du deuxième et aux entrées du bloc de décision, ce bloc supplémentaire réalisant au moins un module d'estimation de fréquence pour déterminer les fréquences des signaux émis en aveugle et/ou au moins un module de phase pour déterminer les valeurs de phase desdits signaux.

Selon une autre particularité, le module de phase peut être disposé dans un bloc de calcul supplémentaire relié aux sorties du bloc de calcul de fréquence du bloc supplémentaire.

Selon une autre particularité, à l'initialisation du système des paramètres $\theta_i$ sont fournis par défaut par une mémoire du système, permettant dans les premiers instants, appelés phase de convergence, la convergence des $\theta_i$ vers les valeurs pertinentes ; puis lorsque le système atteint un voisinage défini des paramètres $\theta_i$, le système entre en phase dite de production ou de suivi, dans laquelle les distances entre les valeurs calculées et celles mémorisées et définissant un voisinage sont inférieures à certains seuil pré mémorisés, les sorties du système démodulateur sont alors fiables et utilisables pour les appliquer à un appareil d'utilisation ou à d'autres éléments matériels hardware ou software ou firmware permettant de finaliser la démodulation.

Selon une autre particularité, chacun des blocs de traitement N0 d'au moins une des deux voies reçoit chacun des deux signaux d'entrée $x^h_0$, $x^v_0$ représentant respectivement un échantillonnage de chaque voie, pour générer les signaux de sortie $x^v_1$ et $x^h_1$, les signaux $x_3^h$ et $x_3^v$ étant représentatifs d'une correction appliquée à chaque signal $x_0$ par les signaux de sortie respectifs $x_2^v$, $x_2^h$, de chacun des filtres G de chaque voie, émulés chacun par un bloc de traitement N2, les signaux $x_3^h$ et $x_3^v$ sont envoyés sur les cascades en série des blocs de traitement N3, N4 et N5 de chaque voie, émulant chacun le signal indiquant l'amplification de la voie (ampli), pour le bloc N3, respectivement la fréquence (fq) de la voie pour le bloc N4 et respectivement la phase ($\varphi$) de la voie pour le bloc N5.

Selon une autre particularité, chaque sortie respective $y^h$, $y^v$ de chaque bloc de traitement N5 émulant la phase de chaque voie H et V, est envoyée sur chaque bloc de décision N6 de chaque voie et sur chacune des entrées respectives du circuit de rétro-propagation d'au moins deux erreurs($e^h$ et $e^v$) à travers les blocs « miroirs » qui permettent le calcul à la volée des incréments des différents paramètres des blocs de la chaine le système comprenant plusieurs modules de traitements d'une pluralité d'observation de chaque signal d'entrée ($x_i$), chacun associé à un bloc miroir ou résiduel « Update » pour chaque paramètre phase, fréquence, ampli et un bloc miroir ou résiduel « Propagate » correspondant pour chaque paramètre phase, fréquence, amplification.

Selon une autre particularité, la sortie $Z^h$, $Z^v$ de chaque bloc décision, est également envoyée à une paire de multiplieur ($M_1^h$, $M_2^h$, $M_1^v$, $M_2^v$), recevant respectivement, l'un du bloc phase et l'autre du bloc fréquence fq. La sortie du dernier multiplieur $M_2^i$ de chaque voie est envoyée sur chacun des filtres G de chaque voie, émulés chacun par un bloc de traitement ($N_2^h$, $N_2^v$) de chaque voie.

Selon une variante l'invention concerne une méthode, selon la revendication 1, temps réel de démodulation aveugle de signaux de télécommunication numérique, à partir de l'observation d'une version échantillonnée de ce signal

Un signal mono-voie est défini comme un signal numérique modulé linéairement et transmis par transposition de fréquence sur une largeur de bande finie. Un signal bi-voies est défini comme un couple de signaux mono-voies multiplexés sur deux polarisations orthogonales.

La méthode appliquée dans un certain schémas permet notamment de démoduler un signal mono-voie de modulation linéaire en compensant : l'amplification du signal, sa phase, son résidu de porteuse, les effets du canal de propagation.

La méthode appliquée selon un autre schéma permet notamment de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

La méthode décrite ici peut être considérée en toute généralité une suite de blocs MIMO (multi inputs, multi outputs) appelés « neurones spécialisés », chaque bloc (i) réalisant un traitement élémentaire paramétré par un ensemble $\theta_i$. Si tous les $\theta_i$ de la chaine sont bien réglés, la chaine procède à la démodulation effective du signal. Si les \theta_i ne sont pas connus, la chaine permet d'apprendre en ligne les valeurs pertinentes pour chaque $\theta_i$. A l'initialisation du système des $\theta_i$ sont fournis par défaut par une mémoire. Dans les premiers instants, le système permet la convergence des $\theta_i$ vers les valeurs pertinentes ; cette phase est appelé phase de convergence ; le signal démodulé produit en sortie n'est alors pas fiable. Quand le système atteint un voisinage des paramètres $\theta_i$, on entre en phase dite de production ou de suivi. C'est à dire que les distances entre les valeurs calculées et celles mémorisées, dans le système implémentant la méthode et définissant un voisinage sont inférieures à certains seuils pré-mémorisés. Les sorties du démodulateur sont alors fiables et utilisables. Quand le système atteint un voisinage des paramètres $\theta_i$, on entre en phase dite de production ou de suivi.

Les sorties du démodulateur sont alors fiables et conjointement à la démodulation du signal, le système poursuit la variation des paramètres du système. Le système ne bascule pas explicitement d'un mode à l'autre, la seconde phase se place dans la continuité de la première.

La méthode de l'invention peut comprendre les étapes suivantes :

- acquisition par un échantillonnage d'une première pluralité du signal pour constituer chacune une entrée d'un réseau de L blocs de traitement aussi appelés ici « neurones spécialisés », chaque neurone étant simulé par les sorties du bloc précédent, la première pluralité du signal étant soumise en entrée au premier bloc simulant un premier neurone du réseau pour générer une pluralité de sorties du premier bloc; chaque neurone $F_i$ étant simulé par les sorties d'une chaine amont $G_i$ et stimulant une chaine aval $H_i$ ; chaque jeu d'échantillons parcourt la même chaine de traitement ;
- les sorties des derniers blocs du réseau correspondent idéalement aux symboles démodulés ;
- ajout d'une non linéarité à chacune des sorties du dernier bloc du réseau permettant de calculer un signal d'erreur et propagation de cette erreur dans le sens inverse de la chaine de traitement (« retropropagation ») ;
- estimation à réception par chaque neurone (i) de l'erreur d'un terme correctif $\delta\theta_i$ et mise à jour dans chaque bloc de la valeur du paramètre $\theta_i$ selon $\theta_i \mathrel{+}= \delta\theta_i$.

Selon une autre particularité, chaque neurone du réseau réalise spécifiquement :

- un traitement d'une fonction « Next », implémentée et mise en oeuvre dans un sous bloc logique de traitement ($F_i^{(N)}$), pour générer des sorties à partir d'une pluralité d'observation du signal et les transmettre au bloc de traitement du neurone suivant du réseau - cette fonction s'écrit de façon générale sous la forme $(X_{i+1,0}, \cdots, X_{i+1,m_{i+1}-1})$ = next$(X_{i,0}, \cdots, X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$ ;

- un traitement d'une fonction « Propagate », implémentée et mise en oeuvre dans un sous bloc logique « Propagate » ($F_i^{(P)}$) pour calculer les erreurs $(e_{i+1,0}, \cdots, e_{i+1,m_{i+1}-1})$ fournies par le bloc $F_{i+1}^{(P)}$ ou par $(e_{L-1,0}, \cdots, e_{L-1,N-1})$ = $(e_0, \cdots, e_{N-1})$ avec $e_j = \overline{z_J - y_J}$ en bout de chaine soit à l'entrée $F_{L-1}^{(P)}$ ; pour le i-ème neurone, cette fonction s'écrit de façon générale sous la forme $(e_{i,0}, \cdots, e_{i,m_i-1})$ = propagate$(e_{i+1,0}, \cdots, e_{i+1,m_{i+1}-1})$

- un traitement d'une fonction « Update », implémentée et mise en oeuvre dans un sous bloc logique « Update » ($F_i^{(U)}$), pour calculer les paramètres correctif $\delta\theta_i$ à appliquer à la valeur courante du paramètre mémorisé en interne $\theta_i$ à partir des erreurs $(e_{i+1,0}, \cdots, e_{i+1,m_{i+1}-1})$ renvoyées par le sous bloc $F_{i+1}^{(P)}$ ; cette fonction s'écrit de façon générale sous la forme $\delta\theta_i$ = update$(e_{i+1,0}, \cdots, e_{i+1,m_{i+1}-1})$.

Selon une autre particularité, chaque neurone comprend au moins une implémentation et une mise en oeuvre d'une suite de traitements élémentaires de la forme :

- le sous bloc $F_i^{(N)}$ réalise $(X_{i+1,0}, \cdots, X_{i+1,m_{i+1}-1})$ = next$(X_{i,0}, \cdots, X_{i,m_i-1})$, $X_{ij} \in K^{q_{ij}}$

avec $q_{ij}$ un entier et $K$ l'espace des nombres réels ou l'espace des nombres complexes

- le sous bloc $F_i^{(p)}$ réalise $\left(e_{i,0}, \cdots, e_{i,m_i-1}\right) = \text{propagate}\left(e_{i+1,0}, \cdots, e_{i+1,m_{i+1}-1}\right)$

- le sous bloc $F_i^{(U)}$ réalise $\delta\theta_i = \text{update}\left(e_{i+1,0}, \cdots, e_{i+1,m_{i+1}-1}\right)$

Selon une autre particularité, l'ajout de la non-linéarité à la sortie du dernier bloc ( $H_i^{(N)}$ ) du réseau est mise en oeuvre par la fonction :

$$z_j = \text{NL}\left(y_j\right)$$

dans laquelle

- $z_j$ est le signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite

Selon une autre particularité, la rétropropagation des erreurs calculées est obtenue par les traitements, implémentés et mise en oeuvre par un algorithme de rétropropagation de l'erreur, suivants :

- Initialisation de la rétropropagation sous la forme
  pour

$$0 \leq k < N, e_{L,k} = \overline{z_k - y_k}$$

- Propagation de l'erreur par le sous-neurone $F_i^{(P)}$ dans la fonction $(e_{i,0}, \cdots, e_{i,m_i}-1) = \text{propagate}(e_{i+1,0}, \cdots, e_{i+1,m_{i+1}-1})$ selon les calculs

  ∘

$$\forall 0 \leq j < m_i, e_{i,j} = \sum_k e_{i+1,k} \cdot \frac{\partial F_{i,k}}{\partial x_{i,j}}$$

Selon une autre particularité, la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i = \text{update}(e_{i+1,0}, \cdots, e_{i+1,m_{i+1}-1})$ selon :

∘ Calcul de $\Delta_i$ :

▪ Pour

$$0 \leq j < M_{i+1}, D_{i,j} = e_{i+1,j} \cdot \frac{\partial F_{i,j}^{(N)}}{\partial \theta_i}$$

▪

$$\Delta_i = \sum_j D_{i,j}$$

○ Mise à jour de $\theta_i$ :

- $\theta_i += 2\mu\Re(\Delta_i)$ si $\theta_i$ est dans un *R*espace vectoriel

- $\theta_i += 2\mu\Delta_i$ si $\theta_i$ est dans un *C*espace vecoriel

Avec - $\mu_i$ un paramètre réel appelé « vitesse d'apprentissage »

- $\delta\theta_i$ est le paramètre correctif du paramètre $\theta_i$
- $D_{ij}$ est une quantité intermédiaire de calculs auxiliaires pouvant être mémorisées temporairement.

Selon une autre particularité, au fil du traitement des échantillons en entrée du système par les différents sous-blocs, les valeurs des différents $\theta_i$ initialisées de façon arbitraire, convergent vers des valeurs rendant la démodulation effective.

Selon une autre particularité, le réseau de neurones spécialisé constitue une suite de blocs de type MIMO (« multi inputs, multi outputs »).

Selon une autre particularité, la méthode comprend en outre le stockage par au moins un tampon mémoire de la pluralité d'entrée et dans au moins un autre tampon de la pluralité de sorties de chaque neurone spécialisé du réseau.

Selon une autre particularité, à l'initialisation du système informatique constituant un démodulateur des $\theta_i$ sont fournis par défaut par une mémoire du système, dans les premiers instants de la mise en oeuvre de la méthode, le système permet la convergence des $\theta_i$ vers des valeurs pertinentes.

Selon une autre particularité, lorsque les distances entre les valeurs calculées et celles mémorisées par le démodulateur et définissant un voisinage sont inférieures à certains seuils pré mémorisés par le démodulateur, les sorties du démodulateur sont alors délivrées à un appareil d'utilisation.

Un autre but est de remédier à un ou plusieurs inconvénients de l'art antérieur concernant la mise en oeuvre ou l'implémentation d'une méthode de démodulation en aveugle des signaux de télécommunication numérique, dans un matériel informatique. La méthode permet la séparation des composantes d'un signal bi-voies reçu après mélange.

Ce but est atteint par un produit programme d'ordinateur implémenté sur un support mémoire, susceptible d'être mis en oeuvre au sein d'une unité de traitement informatique, soit par un hardware ou une combinaison hardware et firmware, et comprenant des instructions pour la mise en oeuvre d'une méthode selon l'une quelconque des revendications précédentes.

Un autre but est de remédier à un ou plusieurs inconvénients de l'art antérieur concernant l'application d'une méthode de séparation et de démodulation en aveugle des signaux de télécommunication numérique en modulation linéaire, dans un réseau informatique.

Ce but est atteint par une utilisation dans un système de démodulation en aveugle d'un signal de télécommunication, le système comprenant au moins un réseau de neurones spécialisés chacun définissant respectivement un filtrage par un premier neurone spécialisé, un gain d'amplification par un second neurone spécialisé, la fréquence du signal par un troisième neurone spécialisé et la valeur de phase du signal par un quatrième neurone spécialisé ; caractérisé en ce que la méthode selon l'une quelconque des revendications précédentes est mise en oeuvre pour déterminer les caractéristiques du signal émis en aveugle.

D'autres particularités et avantage de la présente invention sont détaillés dans la description qui suit.

DESCRIPTION DES FIGURES ILLUSTRATIVES

D'autres particularités et avantages de la présente invention apparaîtront plus clairement à la lecture de la description ci-après, faite en référence aux dessins annexés, dans lesquels :

- la figure 1 représente schématiquement l'intégration d'un « neurone spécialisé » $F_i$ à un ensemble de neurones amont ($G_i$) et à un ensemble de neurones aval ($H_i$) d'une méthode temps réel de séparation et de démodulation aveugle de signaux de télécommunication numérique, à mettre en oeuvre dans au moins un mode de réalisation de l'invention ;
- la figure 2 représente schématiquement les traitements réalisés par le neurone spécialisé nommé du réseau, selon un mode de réalisation de l'invention ;
- la figure 3 représente schématiquement une chaine de traitement d'un démodulateur aveugle de type mono-voie, selon un mode de réalisation de l'invention ;
- les figures 4 et 5 représentent schématiquement une chaine de traitement d'un démodulateur aveugle de type multi-voies (comportant au moins deux voies), permettant respectivement, la génération et la transmission au bloc suivant d'une pluralité de sorties du bloc précédent et la rétro-propagation des erreurs calculées représentée à la figure 5.

Sur les différentes figures, les mêmes références peuvent désigner des éléments identiques ou similaires.

DESCRIPTION DES MODES DE REALISATION PREFERES DE L'INVENTION

Dans la suite, on notera que chaque neurone spécialisé du réseau correspond à un bloc logique de traitement et comprend au moins un sous-bloc ou sous-module fonctionnel (ou opérateur de calcul). Chacun des blocs des neurones comprend au moins une machine informatique et un logiciel ou code exécutable par la machine pour définir un ou plusieurs paramètre(s) obtenu(s) en calculant une ou plusieurs fonction(s) analytique(s) (qu'elles soient réelles, complexes, d'une ou de plusieurs dimensions spécifique(s)

La présente invention concerne une méthode temps réel de démodulation aveugle de signaux de télécommunication numérique, à partir de l'observation par échantillonnage d'un signal, ce signal correspond à la réception d'un signal de modulation linéaire ayant subi des déformations lors de sa transmission, le processus de traitement comprenant les étapes suivantes :

- acquisition par échantillonnage de $m_0$ signaux $(x_{0,.0}, \cdots, x_{0,m_0-1})$ pour constituer chacune une entrée d'un réseau de neurones spécialisés ; chaque neurone $F_i$ étant simulé par les sorties d'une chaine amont $G_i$ et stimulant une chaine aval $H_i$ ; chaque jeu d'échantillons parcourt la même chaine de traitement ;

- pour chaque nouvel échantillon en entrée, chaque sous neurone $F_i^{(N)}$ est stimulé par les sorties de la chaine amont $G_i^{(N)}$ constituée de la mise en cascade des neurones spécialisés $F_0^{(N)}$ à $F_{i-1}^{(N)}$ et stimulant la chaine aval $H_i^{(N)}$ constituée des neurones spécialisés $F_{i+1}^{(N)}$ à $F_{L-1}^{(N)}$ ; les traitements réalisés par le sous module $F_i^{(N)}$ dépendent d'un paramètre mémorisé en interne $\theta_i$ ; les sorties du dernier neurone $F_{L-1}^{(N)}$ constituent le sorties d'intérêt du système ou encore les signaux démodulés et sont notées $y_0 \cdots y_N$ ;

- une fonction non linéaire (*NL*) est appliquée indépendamment à chaque signal démodulé $y_j$ pour produire les variables $(z_j)$ et calculer les erreurs de bout de chaine $e_j = \overline{z_J - y_j}$ ;

- rétropropagation de l'erreur et mise à jour du paramètre $\theta_i$ ;

- un signal d'erreur traverse le réseau en sens inverse : du neurone $F_{L-1}$ au neurone $F_0$ ; l'erreur en entrée du neurone $F_{L-1}$ est le vecteur $(e_{L-1,0}, \cdots, e_{L-1,N-1}) = (e_0, \cdots, e_{N-1})$ ; en traversant le neurone $y$, l'erreur est modifiée par le sous neurone $F_j^{(P)}$ avant d'être transmise au neurone $F_{j-1}$ ; parallèlement à la retroprogation de l'erreur du neurone $y$ au neurone $j$ - 1, l'erreur en provenance du neurone $j$ + 1 est mise en entrée du sous neurone $F_j^{(U)}$ qui produit un terme correctif $\delta\theta_i$ qui permet la mise à jour du paramètre interne $\theta_i$ selon $\theta_i$ += $\delta\theta_i$.

Cette erreur calculée peut permettre de corriger la valeur courante de $\theta_i$ chaque bloc. Les sorties des derniers blocs du réseau correspondent idéalement aux symboles démodulés.

Ces signaux de télécommunication peuvent inclure des déformations comprenant notamment : un filtre de canal (et un filtre de co-canal dans le cas bi-voies), une amplification, une valeur de phase, un résidu de porteuse, du bruit et d'autres perturbations stochastiques comme du bruit de phase. Ainsi, selon l'invention, le réseau de démodulation va corriger ces différents effets à travers des neurones de traitement spécialisés. Par neurones de traitement spécialisés, on entend une ou plusieurs fonctions dont les paramètres peuvent être mise à jour par rétropropagation.

Dans certains modes de réalisation, les paramètres $\theta_i$ des différents blocs de traitement sont prédéfinis initialement, par exemple de façon arbitraire sans s'éloigner des valeurs attendues. Pour chaque échantillon entrant dans le système et pour chaque neurone i, notre système produit un terme correctif $\delta\theta_i$ qui est ajouté à la valeur courante du paramètre $\theta_i$ : $\theta_i$ += $\delta\theta_i$. Cette équation de mise à jour produit une suite de valeurs de $\theta_i$ qui convergent vers la valeur de $\theta_i$ qui permet de démoduler au mieux le signal d'entrée.

Dans certains modes de réalisation, chaque neurone $F_i$ du réseau réalise spécifiquement :

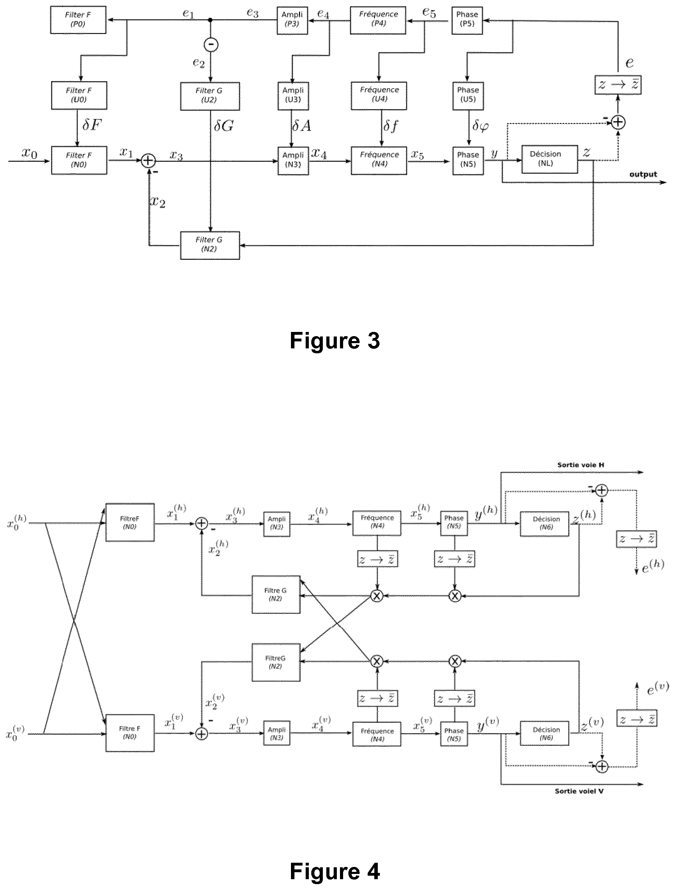

- un traitement d'une fonction « next », implémentée et mise en oeuvre dans le sous-bloc logique traitement $F_i^{(N)}$ pour générer des sorties à partir d'une pluralité d'observation et les transmettre au bloc de traitement du neurone suivant du réseau ; pour le neurone $F_i$, cette fonction s'écrit de façon générale avec ses entrées-sorties sous la forme $(X_{i+1,0}, \cdots, X_{i+1,m_{i+1}-1}) = \text{next}(X_{i,0}, \cdots, X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$. Chaque traitement est paramétré par un ensemble de paramètres $\theta_i$ d'où la notation $F_i^{(N)} = F_i^{(N)}(\cdot \mid \theta_i)$ quand on veut rappeler l'importance du paramétrage. Chaque fonction « Next » est représentée sur les figures 3 à 5 par un bloc $N_i$ ;

- un traitement d'une fonction « Propagate », implémentée et mise en oeuvre dans le sous-bloc logique $F_i^{(P)}$ pour calculer les erreurs $(e_{i,0}, \cdots, e_{i,m_i-1})$ à partir des erreurs $(e_{i+1,0}, \cdots, e_{i+1,m_{i+1}-1})$ fournies par le bloc $F_{i+1}^{(P)}$ ou par $(e_{L-1,0}, \cdots, e_{L-1,N-1}) = (e_0, \cdots, e_{N-1})$ avec $e_j = \overline{z_j - y_j}$ en bout de chaine soit à l'entrée $F_{L-1}^{(P)}$. Cette fonction s'écrit pour le i-ème neurone : $(e_{i,0}, \cdots, e_{i,m_i-1}) = \text{propagate}(e_{i+1,0}, \cdots, e_{i+1,m_{i+1}-1})$. Chaque fonction « Propagate » est représentée sur les figures 3 à 5 par un bloc $P_i$ dit bloc résiduel;

- un traitement d'une fonction « Update», implémentée et mise en oeuvre dans le sous-bloc logique $F_i^{(U)}$ pour calculer le terme correctif $\delta\theta_i$ à appliquer à la valeur courante du paramètre mémorisé en interne $\theta_i$ à partir des erreurs $(e_{i+1,0}, \cdots, e_{i+1,m_{i+1}-1})$ renvoyées par le sous bloc $F_{i+1}^{(P)}$. Cette fonction s'écrit de façon générale sous la forme $\delta\theta_i = \text{update}(e_{i+1,0}, \cdots, e_{i+1,m_{i+1}-1})$. Chaque fonction « Update » est représentée sur les figures 3 à 5 par un bloc $U_i$ dit bloc résiduel.

Par implémenté et mise en oeuvre, on entend soit l'exécution d'un programme correspondant aux fonctions ou formules mathématiques (explicitées dans le texte), par un matériel informatique (tel qu'un microprocesseur et une mémoire) ; soit par un hardware ou une combinaison hardware et firmware.

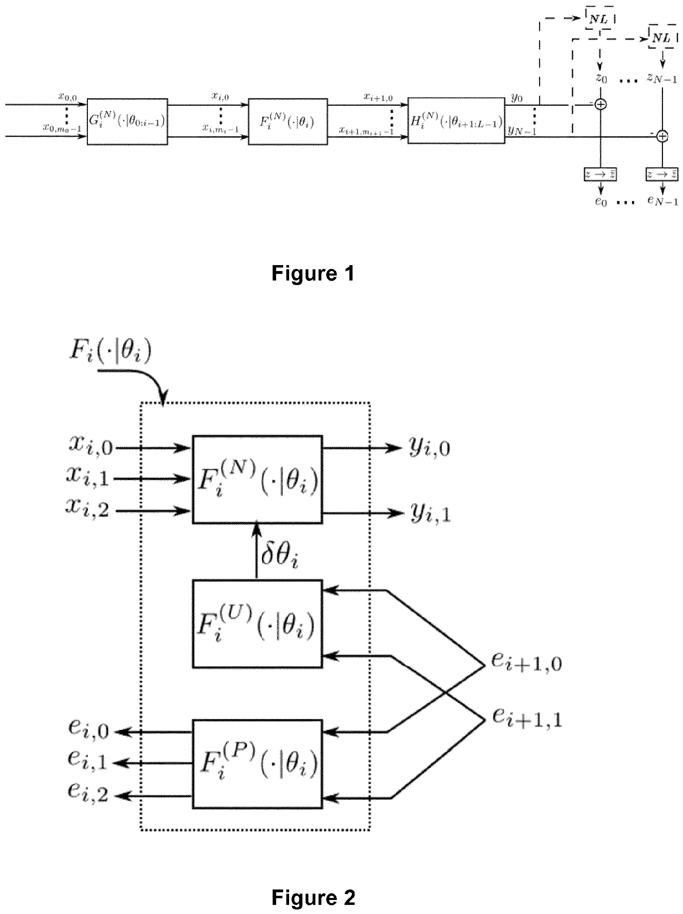

Ainsi, comme représenté par exemple sur la figure 2, chaque neurone $F_i$ encapsule au moins deux sous-neurones logiques qui implémentent chacun au moins une des deux fonctions « update » et « next » ci-après et la fonction « propagate » qui n'est pas nécessairement implémentée par le premier bloc ($G_i$) :

- $$F_i^{(N)} \text{ implémente } (X_{i+1,0}, \cdots, X_{i+1,m_{i+1}-1}) = \text{next}(X_{i,0}, \cdots, X_{i,m_i-1})$$

- $$F_i^{(P)} \text{ implémente } (e_{i,0}, \cdots, e_{i,m_i-1}) = \text{propagate}(e_{i+1,0}, \cdots, e_{i+1,m_{i+1}-1})$$

- $$F_i^{(U)} \text{ implémente } \delta\theta_i = \text{update}(e_{i+1,0}, \cdots, e_{i+1,m_{i+1}-1})$$

La figure 1, par exemple représente schématiquement l'intégration d'un « neurone spécialisé » $F_i$ à une chaine ou un ensemble de neurones amont ($G_i$) et à une chaine ou un ensemble de neurones aval ($H_i$) d'une méthode temps réel de démodulation aveugle de signaux de télécommunication numérique. Le neurone $F_i$ étant relié en entré au dernier des neurones de l'ensemble $G_i$, et en sortie au premier de l'ensemble $H_i$.

Dans certains modes de réalisation, un des blocs de traitement $F_i^{(N)}$ comprend au moins un programme implémentant et mettant en oeuvre une suite de traitements élémentaires de la forme :

- $$F_i^{(N)}\text{réalise}(X_{i+1,0}, \cdots, X_{i+1,m_{i+1}-1}) = \text{next}(X_{i,0}, \cdots, X_{i,m_i-1}), X_{ij} \in K^{q_{ij}}$$

avec $q_{ij}$ un entier et $K$ l'espace des nombres réels ou l'espace des nombres complexes

- $$F_i^{(p)}\text{réalise}(e_{i,0}, \cdots, e_{i,m_i-1}) = \text{propagate}(e_{i+1,0}, \cdots, e_{i+1,m_{i+1}-1})$$

-

$$F_i^{(U)} \text{réalise } \delta\theta_i = \text{update}\left(e_{i+1,0}, \cdots, e_{i+1,m_{i+1}-1}\right)$$

Le traitement réalisé par le bloc ( $F_i^{(N)}$ ) dépend d'un paramètre $\theta_i$ qui peut être un nombre réél ou complexe, un vecteur lui-même réel ou complexe...

Dans certains modes de réalisation, la fonction « Next » implémentée dans le sous-neurone ou sous bloc $F_i^{(N)}$ est connue analytiquement et dépend d'un paramètre $\theta_i$.

Elle pourra être notée $\left(X_{i+1,0}, \cdots, X_{i+1,m_{i+1}-1}\right) = F_i^{(N)}\left(X_{i,0}, \cdots, X_{i,m_i-1} \mid \theta_i\right)$ .

Les projections élémentaires du vecteur de sortie sur la composante $X_{i+1,j}$ pourra être notée $F_{i,j}^{(N)}$ .

Dans certains modes de réalisation, comme représenté par exemple sur la figure 1, un réseau de neurones spécialisés (pouvant être agencé dans un démodulateur) pour démoduler en aveugle un signal de télécommunication en modulation linéaire, comprend dans chacun des neurones un bloc de traitement ( $G_i^{(N)}$ , $F_i^{(N)}$ , $H_i^{(N)}$ ). Le premier bloc de traitement ( $G_i^{(N)}$ ) reçoit deux signaux correspondant chacun à une première pluralité d'observation du signal pour générer une pluralité de sorties qui sont transmis au bloc logique ( $F_i^{(N)}$ ) suivant. Le bloc logique ( $F_i^{(N)}$ ) intègre la pluralité de sorties pour générer à son tour une autre pluralité de sorties qui sont transmis au dernier bloc logique ( $H_i^{(N)}$ ) du réseau. Ce dernier bloc ( $H_i^{(N)}$ ) intègre à son tour la pluralité de sorties du précédent bloc logique ( $F_i^{(N)}$ ) pour générer également une pluralité de sorties. Un filtre de non linéarité est appliqué à la sortie du dernier bloc ( $H_i^{(N)}$ ), afin de calculer un signal d'erreur (e) pour pouvoir le rétro-propager de cette erreur calculée sur chacune des entrées du réseau associée à l'entrée respective du réseau.

Dans certains modes de réalisation, l'ensemble des L blocs peut exécuter une chaine de traitements de la forme, implémentée et mise en oeuvre par au moins un programme, suivante:
pour tout $a \le i < L$

$$(y, \cdots, y_{N-1}) = H_i^{(N)}\left(F_{i,0}^{(N)}(x_{i,0} \cdots x_{i,M_i-1} \mid \theta_0), \cdots, F_{i,N_i-1}^{(N)}(x_{i,0} \cdots x_{i,M_i-1} \mid \theta_{n_i-1}) \mid \theta_{i+1:L-1}\right)$$

avec

$$(x_{i,0}, \cdots, x_{i,m_i-1}) = G_i^\theta\left(x_{0,0}, \cdots, x_{0,m_0-1} \mid \theta_{0:i-1}\right)$$
$$= \left(G_{i0}^\theta(x_{0,0}, \cdots, x_{0,m_0-1} \mid \theta_{0:i-1}), \cdots, G_{i,m_i-1}^\theta(x_{0,0}, \cdots, x_{0,m_0-1} \theta_{0:i-1})\right)$$

Un nombre de L blocs s'enchainent pour réaliser un traitement global. L'enchainement des blocs 0 à $i$ - 1 est noté $G_i^{(N)}(\cdots \mid \theta_{0:i-1})$ et l'enchainement des blocs $i$ + 1 à L - 1 est noté $H_i^{(N)}(\cdots \mid \theta_{i+1:L-1})$ . Les sorties du dernier bloc sont notées $y_0, \cdots, y_{N-1}$ .

On note $F_{i,0}^{(N)}\left(x_{i,0} \cdots x_{i,m_i-1} \mid \theta_i\right), \cdots, F_{i,n_i-1}^{(N)}\left(x_{i,0} \cdots x_{i,m_i-1} \mid \theta_i\right)$ les $n_i$ fonctions de projections donnant $Y_{i,k} = F_{i,k}^{(N)}\left(x_{i,0} \cdots x_{i,m_i-1} \mid \theta_i\right)$ pour $a \le k < n_i$.

Dans certains modes de réalisation, les variables dont dépendent chaque sortie de blocs peuvent être explicitées selon la notation suivante : $y_j = y_j^{\theta}(x_{0,0} \cdots x_{0,M_0-1})$ . Chaque sortie de blocs peut être une valeur réelle ou complexe ou même vectorielle.

Dans certains modes de réalisation, l'ajout de la non-linéarité à la sortie du dernier bloc ( $H_i^{(N)}$ ) du réseau est mise en oeuvre par une fonction implémenté dans un programme qui s'écrit :

$$z_j = \mathrm{NL}(y_j)$$

dans laquelle

- $z_j$ est le signal sortant d'un organe de décision du dernier bloc
- $y_j$ est un échantillon démodulé

Dans certains modes de réalisation, la rétropropagation des erreurs calculées est obtenue par les traitements, implémentés et mise en oeuvre par un algorithme de rétropagation de l'erreur, suivants :

- Initialisation de la rétropropagation sous la forme
  pour

$$0 \leq k < N, e_{L,k} = \overline{z_k - y_k}$$

- Propagation de l'erreur par le sous-neurone $F_i^{(P)}$ dans la fonction ($e_{i,0}, \cdots, e_{i,m_i-1}$) = propagate($e_{i+1,0}, \cdots, e_{i+1,m_{i+1}-1}$) selon les calculs

  ○

$$\forall 0 \leq j < m_i, \ e_{i,j} = \sum_k e_{i+1,k} \cdot \frac{\partial F_{i,k}}{\partial x_{i,j}}$$

Dans certains modes de réalisation, la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i$ = update($e_{i+1,0}, \cdots, e_{i+1,m_{i+1}-1}$) selon :

  ○ Calcul de $\Delta_i$ :

  ■ Pour

$$0 \leq j < M_{i+1}, D_{i,j} = e_{i+1,j} \cdot \frac{\partial F_{i,j}^{(N)}}{\partial \theta_i}$$

  ■ $\Delta_i = \Sigma_j D_{i,j}$

  ○ Mise à jour de $\theta_i$ :

  ■ $\theta_i += 2\mu\Re(\Delta_i)$ si $\theta_i$ est dans un R espace vectoriel

  ■ $\theta_i += 2\mu\Delta_i$ si $\theta_i$ est dans un C espace vectoriel Avec

- $\mu_j$ un paramètre réel appelé « vitesse d'apprentissage »
- $\delta\theta_i$ est le paramètre correctif du paramètre $\theta_i$
- $D_{ij}$ est une quantité intermédiaire de calculs auxiliaires pouvant être mémorisées temporairement dans une mémoire ou des registres du hardware implémentant la réalisation
- les $\theta_i$ sont mémorisés temporairement.

Dans certains modes de réalisation, au fil du traitement des échantillons en entrée du système par les différents sous-neurones, les valeurs des différents $\theta_i$, pouvant être initialisées de façon arbitraire, convergent vers des valeurs rendant la démodulation effective.

Dans certains modes de réalisation, le réseau de neurones spécialisé constitue une suite de blocs MIMO (terme anglais pour « multi inputs, multi outputs »), chaque bloc (i) réalisant un traitement élémentaire paramétré par un ensemble $\theta_i$. Si tous les $\theta_i$ de la chaine sont bien réglés, la chaine procède à la démodulation effective du signal.

Dans certains modes de réalisation, les $\theta_i$ ne sont pas connus, et la chaine permet d'apprendre en ligne les valeurs pertinentes pour chaque $\theta_i$. A l'initialisation du système des $\theta_i$ sont fournis par défaut par une mémoire ou buffer. Dans les premiers instants, le système permet la convergence des $\theta_i$ vers les valeurs pertinentes ; cette phase est appelée phase de convergence ; le signal démodulé produit en sortie n'est alors pas fiable. Quand le système atteint un voisinage des paramètres $\theta_i$, on entre en phase dite de production ou de suivi. C'est à dire que les distances entre les valeurs calculées et celles mémorisées et définissant un voisinage sont inférieures à certains seuil pré mémorisés. Les sorties du démodulateur sont alors fiables et utilisable conjointement à la démodulation du signal, le système poursuit la variation des paramètres du système. Le système ne bascule pas explicitement d'un mode à l'autre, la seconde phase (ou phase de production) se place dans la continuité de la première.

Dans certains modes de réalisation, la méthode comprend en outre le stockage par au moins un tampon mémoire de la pluralité d'entrées et dans au moins un autre tampon de la pluralité de sorties de chaque neurone spécialisé du réseau. Les valeurs d'échantillon extraites de la pluralité d'entrée du signal peuvent être transmises dans un premier tampon, pouvant être associé au bloc de traitement correspondant de façon temporaire ou permanente selon l'application souhaitée, de sorte à mémoriser les états internes du signal d'entrée lors d'une phase d'initiation. Les valeurs de la pluralité de sorties peuvent être mémorisées dans un second tampon, pouvant être associé à un bloc de traitement correspondant de façon temporaire ou permanente selon l'application souhaitée, de sorte à mémoriser les états internes du signal de sortie.

Dans certains modes de réalisation, les tampons de mémoire sont du type FIFO (terme anglais « First-In-First-Out ») définissant une méthode pour organiser et manipuler un tampon de données, dans laquelle les premières données entrées sont traitées les premières). Dans la suite, un tampon mémoire FIFO peut être considéré comme un vecteur. Ainsi, dans certains modes de réalisation, les termes du vecteur peuvent aller du plus ancien (premier indice du vecteur) au plus récent (dernier indice du vecteur) élément du tampon FIFO.

Dans certains modes de réalisation, dans le cas de la démodulation aveugle d'un signal de télécommunication numérique en modulation linéaire, on identifie deux types de signaux :

• les signaux dits mono-voies : il s'agit d'un signal classique ou un flux d'information est transmis sur un support ;

• les signaux dits multi-voies ou XPIC (« cross-polarization interférence canceller » ou annuleur d'interférences de polarisation croisée) : il s'agit de plusieurs signaux qui sont multiplexés sur les deux polarisations de l'onde électromagnétique.

Une représentation du signal mono-voie en bande base peut être de la forme :

$$x_b(t) = \sum_{k=-\infty}^{+\infty} s_k h(t - kT)$$

Avec ($s_k$) une suite de nombre complexe inclus dans un sous ensemble fini appelé constellation, h un filtre de mise en forme, T le temps symbole.

Lors de sa transmission, ce signal subit différentes altérations et il peut être reçu sous la forme :

$$x(t) = e^{2\pi j f_0 t}\left(A e^{j\varphi} x_b(t - \delta t) + g * x_b(t)\right) + \eta(t)$$

Avec

• $f_0$ la fréquence de porteuse
• A l'amplitude du trajet principale

- $\varphi$ la phase principale
- $\delta t$ le retard du trajet principal
- $g$ un filtre qui représente plusieurs phénomènes : canal de propagation engendré par des multi trajets, filtre perturbateur introduit par les imperfections des équipements électroniques
- $\eta$ un bruit complexe

Dans le cas du signal mono-voie, la démodulation consiste à retrouver la suite ( $s_k$) à partir de l'observation d'une version échantillonnée de x(t).

Une représentation de signal multi-voies, utilisant deux polarisations pour transmettre deux signaux, en bande base peut être de la forme :

$$x_b^H(t) = \sum_{k=-\infty}^{+\infty} s_k^H h(t - kT)$$

et

$$x_b^V(t) = \sum_{k=-\infty}^{+\infty} s_k^V h(t - kT)$$

Ces signaux sont transmis conjointement sur les polarisations H et V de l'onde électromagnétique. Les deux signaux sont reçus sous la forme :

$$x^H(t) = e^{2\pi j f_0 t} \left( A^H e^{j\varphi^H} x_b^H\left(t - \delta t^H\right) + g_{HH} * x_b^H(t) + + g_{VH} * x_b^V(t) \right) + \eta^H(t)$$

$$x^V(t) = e^{2\pi j f_0 t} \left( A^V e^{j\varphi^V} x_b^V\left(t - \delta t^V\right) + g_{VV} * x_b^V(t) + + g_{HV} * x_b^H(t) \right) + \eta^V(t)$$

Avec

- $f_0$ la fréquence de porteuse
- $A^H, A^V$ l'amplitude du trajet principale sur la voie $H$ et sur la voie $V$
- $\varphi^H, \varphi^V$ la phase principale sur la voie $H$ et sur la voie $V$
- $\delta t^H, \delta t^V$ le retard du trajet principal sur la voie $H$ et sur la voie $V$
- $g_{HH}$ un filtre qui représente le canal du signal $H$ sur la voie de réception $H$
- $g_{VH}$ un filtre qui représente le canal du signal $V$ sur la voie de réception $H$
- $g_{VV}$ un filtre qui représente le canal du signal $V$ sur la voie de réception $V$
- $g_{HV}$ un filtre qui représente le canal du signal $H$ sur la voie de réception V
- $\eta^H, \eta^V$ des bruits complexes sur chaque voies de réception.

Dans le cas du signal multi-voies, la démodulation consiste à retrouver les suites ( $s_k^H$ ) et ( $s_k^V$ ) à partir de l'observation d'une version échantillonnée du signal couple($x^H$ (t),$x^V$ (t)).

L'égalisation du signal consiste à inverser au mieux les canaux de transmissions. On cherche donc à designer une fonction d'égalisation. Une telle fonction nécessite de nombreux paramètres (fréquence, amplitude, filtres d'égalisation...). Dans un mode de transmission « non aveugle », des séquences connues de l'émetteur et du récepteur sont émises régulièrement et permettent de régler l'égaliseur. Dans un contexte aveugle aucune séquence n'est connue et la fonction est difficile à trouver.

Dans certains modes de réalisation, la présente invention permet de trouver la fonction d'égalisation dans le contexte de la démodulation aveugle.

Dans certains modes de réalisation, la présente invention peut être appliquée aussi bien dans un contexte aveugle que non aveugle mais parait particulièrement intéressant dans le premier contexte. En effet, cette invention permet de régler une chaine de traitement paramétrable sans connaissance a priori. L'invention est en particulier pertinente quand plusieurs paramètres sont en jeu.

Dans un certains modes de réalisation, un signal mono-voie est défini comme un signal numérique modulé linéairement et transmis par transposition de fréquence sur une largeur de bande finie. Un signal bi-voies est défini comme un couple de signaux mono-voies multiplexés sur deux polarisations orthogonales.

La méthode appliquée dans un certain schémas permet notamment de démoduler un signal mono-voie de modulation linéaire en compensant : l'amplification du signal, sa phase, son résidu de porteuse, les effets du canal de propagation. La méthode appliquée selon un autre schéma de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

Sans perte de généralité et pour simplifier les explications dans la suite on pourra, par exemple, considérer qu'un signal mono-voie est un cas particulier de signal bi-voies.

Dans certains modes de réalisation, comme par exemple représenté sur les figures 3 à 5, les principes de calcul de la méthode de la présente invention pour déterminer le ou les filtre(s), l'amplification, les fréquences du signal et les valeurs de phase du signal, peuvent être mis en oeuvre dans un démodulateur aveugle d'un signal de type mono-voie et/ou d'un signal de type multi-voies.

Ainsi, la figure 3 représente un exemple de mise en oeuvre de réseau de neurones spécialisés pour la démodulation aveugle d'un signal de type mono-voie. La figure 3 représente l'enchainement des blocs de traitements (N0 à N6) puis la rétropropagation de l'erreur (e) à travers les blocs (P5 à P0), pouvant représenter chacun une caractéristique du signal. Les erreurs permettent le calcul à la volée dans les blocs de la chaine (U5 à U0) des incréments des différents paramètres à appliquer aux blocs de traitement. Chacun des blocs U5 à U0 constituant des modules « updates », implémentant la fonction « Update ». Le bloc P0, implémentant la fonction « Propagate » comprend une sortie pouvant être associée à une éventuelle chaine en amont par exemple de synchronisation. Le filtre F peut permettre de compenser la déformation du signal dû à la propagation. Le démodulateur comprend plusieurs modules de traitements (Nx avec x = 0 à 4), chacun pour un paramètre N0 (filtre), N2 (amplification), N3 (fréquence) et N4 (phase), chacun associé à un bloc « Update » (Ux avec x = 0 à 3) et un bloc « Propagate » (Px avec x = 0 à 3). Un bloc de filtrage générant une pluralité d'observation du signal d'entrée (x), pouvant être mémorisées dans un tampon mémoire, est appliqué au premier bloc de traitement N0. Ce bloc (N0) produit un filtrage du signal d'entrée (x) en mémorisant les dernières valeurs de ce dernier dans un tampon ou buffer interne de type FIFO. Sa sortie constitue l'entrée du bloc (N1) corrigeant l'amplification du signal pour que la puissance à sa sortie constitue l'entrée du bloc (N2) corrigeant la dérive de porteuse du signal. La sortie de (N2) constitue l'entrée de (N3) qui corrige la phase du signal. Le bloc ou module de traitement ou sous neurone logique (N3) est le dernier neurone spécialisé de la chaine. Sa sortie complexe (y) se voit appliquer la non linéarité (N4) qu'est la fonction de décision ou slicer associé à la modulation du signal. La sortie du bloc (N4) est z. Par exemple, l'erreur (e) est calculée en réalisant la conjugaison de la différence entre une pluralité de sorties de décision (z) et la pluralité de sortie (y). L'erreur associée à l'échantillon traitée est $e_4 = \overline{z - y}$. Elle est injectée (ou rétro-propager) en parallèle dans le bloc « propagate » (P3) et dans le bloc « update » (U3). Le bloc (P3) permet de calculer l'erreur $e_3$ et le bloc (U3) permet de calculer l'incrément $\delta\varphi$ à appliquer à la valeur courante de la phase dans le module (N3). L'erreur $e_3$ traverse ensuite les blocs (P2) produisant l'erreur $e_2$ et le bloc (U2) qui permet de calculer l'incrément de fréquence $\delta f$ à appliquer à la valeur courante de la fréquence dans (N2). L'erreur $e_2$ traverse ensuite les blocs (P1) produisant l'erreur $e_1$ et le bloc (U1) qui permet de calculer l'incrément d'amplitude $\delta A$ à appliquer à la valeur courante de l'amplitude dans le bloc (N1). Enfin l'erreur $e_1$ traverse ensuite les blocs (P0) produisant l'erreur $e_0$ et le bloc (U0) qui permet de calculer l'incrément vectoriel $\delta F$ à appliquer à la valeur courante du filtre dans (N0). La valeur ($e_0$) n'est pas utilisée ici mais pourrait se rétropropager dans un réseau amont réalisant des tâches spécialisées comme par exemple la synchronisation du signal.

L'enchaînement des blocs de traitement, la rétropropagation de l'erreur calculée à travers les blocs « propagate » et l'incrément des différents paramètres des blocs de la chaîne via les blocs « update » peuvent être réalisés en cascade et en boucle jusqu'à avoir estimés le plus précisément possible les différents paramètres du signal.

Dans certains modes de réalisation, la méthode appliquée selon un autre schéma du système permet de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

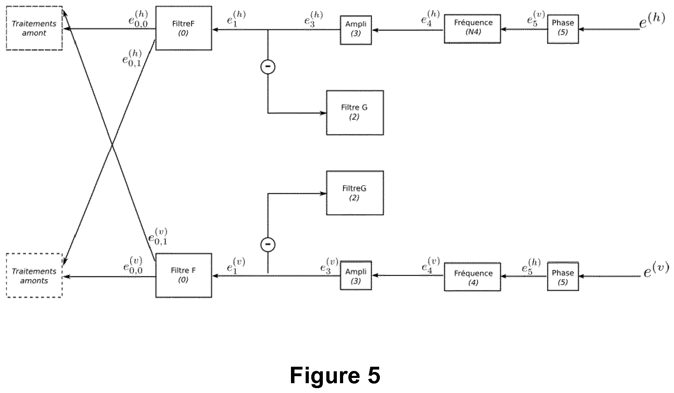

Les figures 4 et 5 représentent un exemple de mise en oeuvre de réseau de neurones spécialisés pour la démodulation aveugle d'un signal de type multi-voies, appliquée dans démodulateur aveugle. La figure 4 illustre l'enchainement des blocs de traitement à partir de la réception des deux échantillons d'entrée $x_0^H$ et $x_0^V$, la figure 5 représente l'enchainement des blocs de propagation et de mise à jour à partir des erreurs $e^H$ et $e^V$ calculées en bout de chaine de traitement. Ainsi, deux blocs N0 reçoivent chacun un signal d'entrée pour générer les signaux de sortie $X_v$ et $X_h$.

Dans la figure 4, chacun des blocs de traitement N0 d'une des deux voies reçoit chacun deux signaux d'entrée

$x^h_0$, $x^v_0$ représentant respectivement un échantillonnage de chaque voie, pour générer les signaux de sortie $x^v_1$ et $x^h_1$. Les signaux ($x_3^h$ et $x_3^v$) sont représentatifs d'une correction appliquée à chaque signal $x_0$ par les signaux de sortie respectifs $x_2^v$, $x_2^h$, de chacun des filtres G de chaque voie, émulés chacun par un bloc de traitement N2. Les signaux $x_3^h$ et $x_3^v$ sont envoyés sur les cascades en série des blocs de traitement N3, N4 et N5 de chaque voie, émulant chacun le signal indiquant l'amplification de la voie (ampli), pour le bloc N3, respectivement la fréquence (fq) de la voie pour le bloc N4 et respectivement la phase(cp) de la voie pour le bloc N5.

Chaque sortie respective $y^h$, $y^v$ de chaque bloc de traitement N5 émulant la phase de chaque voie H et V, est envoyée sur chaque bloc de décision N6 de chaque voie et sur chacune des entrées respectives du schéma de la figure 5. Un signal d'erreur (e) est calculé pour chaque voie du système en réalisant la conjugaison de la différence entre une pluralité de sortie de décision (z) de chaque voie et la pluralité de sorties (y) de la même voie. La sortie $Z^h$, $Z^v$ de chaque bloc décision, est également envoyée à une paire de multiplieur ($M_1^h$, $M_2^h$, $M_1^v$, $M_2^v$), recevant respectivement, l'un du bloc phase et l'autre du bloc fréquence fq. La sortie du dernier multiplieur $M_2^i$ de chaque voie est envoyée sur chacun des blocs filtres G ($N_2^h$, $N_2^v$) de chaque voie.

Ainsi, dans la figure 4, $x_0^H$ et $x_0^V$ sont deux échantillons en entrée du système. Le couple ( $x_0^H, x_0^V$ ) constitue l'entrée d'un premier bloc de filtrage (N0) et le couple retourné ( $x_0^V, x_0^H$ ) constitue l'entrée d'un autre bloc de filtrage (N0). En sortie de chacun de ces blocs (N0), on retrouve une chaine de traitement mono-voie dupliquée filtre excepté. Les deux sorties égalisées sont $y^H$ et $y^V$ qui constituent les deux signaux démodulés. Les erreurs $e^H$ et $e^V$ sont formées de façon identique au cas monovoie.

Dans la figure 5, les erreurs $e^H$ et $e^V$ amorcent la chaine de rétrogradation. L'erreur se propage d'abord dans deux sous-chaines identiques à la chaine de retropropagation du cas monovoie. Pour une meilleure lisibilité, les blocs (x) représentent l'ensemble des blocs (Px avec x = 0 à 3) et (Ux avec x = 0 à 3) qui ont les mêmes entrées. La sortie du bloc (x) est la sortie du bloc (Px). En bout de chaine de retropropagation, chaque bloc de filtrage produit deux erreurs qui peuvent s'interfacer avec une éventuelle chaine amont comme par exemple une chaine de synchronisation.

Ces différentes étapes de cette méthode sont donc réalisées continuellement de façon automatique, pour pouvoir optimiser et autoréguler les calculs ou opérations effectués par les neurones (via au moins un algorithme adapté) de la chaine de traitement. Cette méthode de séparation et de démodulation en aveugle d'un signal de la présente invention, présente l'avantage d'estimer rapidement et en temps réel les différentes caractéristiques des signaux émis et de mettre en place une correction adapté pour chaque signal émis en la rétro-propageant dans la chaîne générique de traitement du signal. Par ailleurs, la méthode de la présent invention présente l'avantage de traiter de façon simple et efficace, les problèmes liés à l'interception de communication et de préférence pour la démodulation aveugle des signaux de télécommunication.

La présente invention concerne également un produit programme d'ordinateur implémenté sur un support mémoire, susceptible d'être mis en oeuvre au sein d'une unité de traitement informatique par un matériel informatique (tel qu'un microprocesseur et une mémoire) ; soit par un hardware ou une combinaison hardware et firmware et comprenant des instructions pour la mise en oeuvre d'une méthode selon l'une quelconque des modes de réalisation précédents.

Dans certains modes de réalisation, la présente invention propose une architecture de type réseau de neurones « spécialisés » pour traiter des problèmes d'interception de communications et plus particulièrement de démodulation aveugle de signaux télécommunication.

En effet, un signal d'entrée traverse un système présentant une architecture ci-dessus pour émuler une chaine de neurones spécialisés; chaque neurone réalise une fonction particulière paramétrée par un ensemble de valeurs. Les valeurs des réglages de chaque neurone spécialisé sont à priori inconnues. Une non linéarité est appliquée au résultat en bout de chaine permettant de calculer une « erreur ». Il est alors possible de rétropropager cette erreur dans la chaine de traitement comme cela est fait en apprentissage par réseau de neurones pour faire évoluer la valeur de chaque paramètre de chaque bloc vers une valeur plus pertinente. Ainsi, dans certains modes de réalisation, à l'initialisation du système des paramètres $\theta_i$ sont fournis par défaut par une mémoire du dispositif. Dans les premiers instants, le système permet la convergence des $\theta_i$ vers les valeurs pertinentes ; cette phase est appelée phase de convergence ; le signal démodulé produit en sortie n'est alors pas fiable. Quand le système atteint un voisinage défini des paramètres $\theta_i$, le système entre en phase dite de production ou de suivi. C'est à dire que les distances entre les valeurs calculées et celles mémorisées et définissant un voisinage sont inférieures à certains seuil pré mémorisés. Les sorties du démodulateur sont alors fiables et utilisables pour les appliquer à d'autres éléments matériels hardware ou software ou firmware permettant de finaliser la démodulation.

Par ce système une fois arrivé en mode de production ou de suivi les calculs sont moins nombreux et peuvent être exécutés en parallèles par les différents éléments matérialisant les blocs et ainsi rendant possible l'utilisation en temps réel.

La présence invention concerne en outre une utilisation dans un système de démodulation en aveugle d'un signal de télécommunication. Le système de démodulation ou de recherche en aveugle des caractéristiques du signal, comprend au moins une architecture hardware ou hardware et firmware implémentant un réseau de neurones spécifiques.

Dans certains modes de réalisation, un premier neurone spécialisé du réseau réalise l'estimation d'au moins un filtre permettant d'acquérir le signal en aveugle et puis un second réalise au moins un module permettant d'estimer l'amplification des signaux pour évaluer par la suite des autres caractéristiques des signaux par les autres neurones du réseau. Dans certains modes de réalisation, le module d'amplification peut être disposé dans un neurone différent du premier neurone. Un second neurone spécialisé réalise au moins un module d'estimation de fréquence pour déterminer les fréquences des signaux émis en aveugle et/ou au moins un module de phase pour déterminer les valeurs de phase desdits signaux. Dans certains modes de réalisation, le module de phase peut être disposé dans un neurone différend du second neurone. Un troisième neurone spécialisé réalise un module de décision pour calculer un signal d'erreur et de rétropropager les erreurs calculées à chacun des blocs résiduels des neurones précédents. La méthode selon l'une quelconque des modes de réalisation précédents, est appliquée pour déterminer les caractéristiques du signal émis en aveugle (par exemple, l'amplitude, la fréquence et la valeur de phase des signaux).

Dans certains modes de réalisation, la méthode de démodulation aveugle peut être appliquée dans le cas de la démodulation d'un signal mono-voie (comme représenté par exemple sur la figure 3) et/ou d'un signal multi-voies (comme représenté par exemple sur les figures 4 et 5).

Dans certains modes de réalisation, pour un signal de type multi-voies, outre la démodulation de chaque voie, la méthode permet la séparation des différentes voies en aveugle.

**Revendications**

**1.** Méthode temps réel de séparation et de démodulation aveugle de signaux de télécommunication numérique, à partir de l'observation d'une version échantillonnée de ce signal et comprenant des paramètres notamment les coefficients d'égalisation, la valeur de la phase ($\varphi$), l'amplitude du signal, leur fréquence et leur temps symbole, cette méthode comprenant les étapes suivantes :

- acquisition par un échantillonnage d'une première pluralité du signal pour constituer chacune une entrée d'un réseau de L blocs de traitement ($G_i$, $F_i$, $H_i$) aussi appelés ici « neurones spécialisés », chaque neurone étant simulé par les sorties du bloc précédent, la première pluralité du signal étant soumise en entrée au premier bloc simulant un premier neurone du réseau pour générer une pluralité de sorties du premier bloc; chaque neurone $F_i$ étant simulé par les sorties d'une chaine amont $G_i$ et stimulant une chaine aval $H_i$ ; chaque jeu d'échantillons parcourt la même chaine de traitement ;
- les sorties des derniers blocs du réseau correspondent idéalement aux symboles démodulés ;
- ajout d'une non linéarité à chacune des sorties du dernier bloc du réseau permettant de calculer un signal d'erreur et propagation de cette erreur dans le sens inverse de la chaine de traitement (« retropropagation ») ;
- estimation à réception par chaque neurone (i) de l'erreur d'un terme correctif $\delta\theta_i$ et mise à jour dans chaque bloc de la valeur du paramètre $\theta_i$ selon $\theta_i$ += $\delta\theta_i$ ; ladite méthode **caractérisée en ce que** chaque neurone ($F_i$) du réseau réalise spécifiquement :

- un traitement d'une fonction « Next », implémentée et mise en oeuvre dans un sous bloc logique de traitement ($F_i^{(N)}$), pour générer des sorties à partir d'une pluralité d'observation du signal de télécommunication numérique et les transmettre au sous-bloc logique de traitement ($H_i^{(N)}$), du bloc de traitement du neurone suivant du réseau ; cette fonction s'écrit de façon générale sous la forme ($X_{i+1,0}, \cdots, X_{i+1,m_{i+1}-1}$) = next($X_{i,0}, \cdots, X_{i,m_i-1}$) avec $m_i$ le nombre d'entrées et $m_{i+1}$ le nombre de sortie de $F_i^{(N)}$ qui correspond au nombre d'entrées de $F_{i+1}^{(N)}$ ;
- un traitement d'une fonction « Propagate », implémentée et mise en oeuvre dans un sous bloc logique « Propagate » ($F_i^{(P)}$) pour calculer des erreurs ($e_{i+1,0}, \cdots, e_{i+1,m_{i+1}-1}$) fournies par le bloc $F_{i+1}^{(P)}$ ou par

$(e_{L-1,0}, \cdots, e_{L-1,N-1}) = (e_0, \cdots, e_{N-1})$ avec $e_j = \overline{z_J} - \overline{y_J}$ en bout de chaine soit à l'entrée $F_{L-1}^{(P)}$ ; pour le i-ème neurone, cette fonction s'écrit de façon générale sous la forme $(e_{i,0}, \cdots, e_{i,m_i-1}) = \text{propagate}(e_{i+1,0}, \cdots, e_{i+1,m_{i+1}-1})$

- un traitement d'une fonction « Update » , implémentée et mise en oeuvre dans un sous bloc logique « Update » ( $F_i^{(U)}$ ), pour calculer des paramètres correctifs $\delta\theta_i$ à appliquer à la valeur courante du paramètre mémorisé en interne $\theta_i$ à partir des erreurs $(e_{i+1,0}, \cdots, e_{i+1,m_{i+1}-1})$ renvoyées par le sous bloc $F_{i+1}^{(P)}$ ; cette fonction s'écrit de façon générale sous la forme $\delta\theta_i = \text{update}(e_{i+1,0}, \cdots, e_{i+1,m_{i+1}-1})$.

**2.** Méthode selon la revendication 1, **caractérisée en ce que** chaque neurone ($F_i$) comprend au moins une implémentation et une mise en oeuvre d'une suite de traitements élémentaires de la forme :

- le sous bloc $F_i^{(N)}$ réalise $\left(X_{i+1,0}, \cdots, X_{i+1,m_{i+1}-1}\right) = \text{next}(X_{i,0}, \cdots, X_{i,m_i-1}), X_{ij} \in K^{q_{ij}}$ avec $q_{ij}$ un entier et $K$ l'espace des nombres réels ou l'espace des nombres complexes

- le sous bloc $F_i^{(p)}$ réalise $\left(e_{i,0}, \cdots, e_{i,m_i-1}\right) = \text{propagate}\left(e_{i+1,0}, \cdots, e_{i+1,m_{i+1}-1}\right)$

- le sous bloc $F_i^{(U)}$ réalise $\delta\theta_i = \text{update}\left(e_{i+1,0}, \cdots, e_{i+1,m_{i+1}-1}\right)$

**3.** Méthode selon l'une des revendications 1 à 2, **caractérisée en ce que** l'ajout de la non-linéarité à la sortie du dernier bloc ( $H_i^{(N)}$ ) du réseau est mise en oeuvre par la fonction :

$$z_j = \text{NL}(y_j)$$

dans laquelle

- $z_j$ est le signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite.

**4.** Méthode selon la revendication 1 à 3, **caractérisée en ce que** la rétropropagation des erreurs calculées est obtenue par les traitements, implémentés et mise en oeuvre par un algorithme de rétropropagation de l'erreur, suivants :

- Initialisation de la rétropropagation sous la forme pour $a \leq k < N$, $e_{L,k} = \overline{z_k} - \overline{y_k}$

- propagation de l'erreur par le sous-neurone $F_i^{(P)}$ dans la fonction $(e_{i,0}, \cdots, e_{i,m_i-1}) = \text{propagate}(e_{i+1,0}, \cdots, e_{i+1,m_{i+1}-1})$ selon les calculs

$$\forall 0 \leq j < m_i, \ e_{i,j} = \sum_k e_{i+1,k} \cdot \frac{\partial F_{i,k}}{\partial x_{i,j}}$$

**5.** Méthode selon la revendication 4, **caractérisée en ce que** la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i = \text{update}(e_{i+1,0}, \cdots, e_{i+1,m_{i+1}-1})$ selon :

∘ Calcul de $\Delta_i$ :

  ▪ Pour

$$0 \leq j < M_{i+1}, D_{i,j} = e_{i+1,j} \cdot \frac{\partial F_{i,j}^{(N)}}{\partial \theta_i}$$

  ▪

$$\Delta_i = \sum_j D_{i,j}$$

∘ Mise à jour de $\theta_i$ :

  ▪ $\theta_i += 2\mu\Re(\Delta_i)$ si $\theta_i$ est dansun **R**espace vectoriel
  ▪ $\theta_i$ += $2\mu\Delta_i$ si $\theta_i$ est dans un **C**espace vecoriel Avec - $\mu_i$ un paramètre réel appelé « vitesse d'apprentissage »

    - $\delta\theta_i$ est le paramètre correctif du paramètre $\theta_i$
    - $D_{ij}$ est une quantité intermédiaire de calculs auxiliaires pouvant être mémorisées temporairement.

**6.** Méthode selon l'une quelconque des revendications 1 à 5, **caractérisée en ce qu'**au fil du traitement des échantillons en entrée du système par les différents sous-blocs, les valeurs des différents $\theta_i$ initialisées de façon arbitraire, convergent vers des valeurs rendant la démodulation effective.

**7.** Méthode selon l'une quelconque des revendications 1 à 6, **caractérisée en ce que** le réseau de neurones spécialisé constitue une suite de blocs de type MIMO (« multi inputs, multi outputs »).

**8.** Méthode selon l'une des revendications 1 à 7, **caractérisée en ce qu'**elle comprend en outre le stockage par au moins un tampon mémoire de la pluralité d'entrée et dans au moins un autre tampon de la pluralité de sorties de chaque neurone spécialisé du réseau.

**9.** Programme d'ordinateur comprenant des instructions exécutables par ordinateur, qui lorsqu'elles sont exécutées mettent en oeuvre toutes les étapes de la méthode selon l'une quelconque des revendications 1 à 8.

**Patentansprüche**

**1.** Echtzeitverfahren zum Trennen und blinden Demodulieren von Signalen digitaler Telekommunikation, ausgehend von der Beobachtung einer abgetasteten Version dieses Signals und umfassend Parameter, insbesondere die Entzerrungskoeffizienten, den Wert der Phase (φ), die Signalamplitude, ihre Frequenz und ihre Symbolzeit, das Verfahren umfassend die folgenden Schritte:

    - Erfassen durch ein Abtasten einer ersten Vielzahl des Signals, um jeweils einen Eingang eines Netzes von L Verarbeitungsblöcken ($G_i$, $F_i$, $H_i$) zu bilden, die hier auch als "spezialisierte Neuronen" bezeichnet werden, wobei jedes Neuron durch die Ausgänge des vorhergehenden Blocks simuliert wird, wobei die erste Vielzahl des Signals an dem Eingang dem ersten Block unterworfen wird, der ein erstes Neuron des Netzes simuliert, um eine Vielzahl von Ausgängen des ersten Blocks zu erzeugen; wobei jedes Neuron $F_i$ durch die Ausgänge einer stromaufwärtigen Kette $G_i$ simuliert wird und eine stromabwärtige Kette $H_i$ stimuliert; wobei jeder Satz von Abtastwerten die gleiche Verarbeitungskette durchläuft;
    - wobei die Ausgänge der letzten Blöcke des Netzes idealerweise den demodulierten Symbolen entsprechen;
    - Hinzufügen einer Nichtlinearität zu jedem der Ausgänge des letzten Blocks des Netzes, um es zu ermöglichen, ein Fehlersignal zu berechnen und diesen Fehler in der umgekehrten Richtung der Verarbeitungskette zu propagieren ("Rückpropagierung");
    - Schätzen bei Empfang durch jedes Neuron (i) des Fehlers eines Korrekturterms $\delta\theta_i$ und Aktualisieren in jedem Block des Parameterwerts $\theta_i$ gemäß $\theta_i += \delta\theta_i$;

wobei das Verfahren **dadurch gekennzeichnet ist, dass** jedes Neuron ($F_i$) des Netzes spezifisch durchführt:

- Verarbeiten einer "Next"-Funktion, die in einem logischen Verarbeitungsunterblock ($F_i^{(N)}$) implementiert und umgesetzt wird, zum Erzeugen von Ausgängen ausgehend von einer Vielzahl von Beobachtungen des digitalen Telekommunikationssignals und zum Übertragen dieser an den logischen Verarbeitungsunterblock ($H_i^{(N)}$), des Verarbeitungsblocks des nächsten Neurons des Netzes; wobei diese Funktion allgemein in der Form ($X_{i+1,0}$, $\cdots$ , $X_{i+1,m_{i+1}-1}$) = next($X_{i,0},...,X_{i,mi-1}$) geschrieben wird, wobei $m_i$ die Anzahl der Eingänge und $m_{i+1}$ die Anzahl der Ausgänge von $F_i^{(N)}$ ist, die der Anzahl der Eingänge von $F_{i+1}^{(N)}$ entspricht;

- Verarbeiten einer "Propagate"-Funktion, die in einem logischen Unterblock "Propagate" ($F_i^{(P)}$) implementiert und umgesetzt wird, zum Berechnen von Fehlern ($e_{i+1,0}$, $\cdots$ , $e_{i+1,m_{i+1}-1}$), die durch den Block $F_{i+1}^{(N)}$ oder durch ($e_{L-1,0},\cdots,e_{L-1,N-1}$) = ($e_0,\cdots$, $e_{N-1}$) geliefert werden, wobei $e_j = \overline{z_J - y_J}$ an einem Ende der Kette oder an dem Eingang $F_{L-1}^{(P)}$ ist; wobei diese Funktion für das i-te Neuron allgemein in der Form ($e_{i,0},\cdots,e_{i,mi-1}$) = propagate ($e_{i+1,0}$, $\cdots$ , $e_{i+1,m_{i+1}-1}$) geschrieben wird

- Verarbeiten einer "Update"-Funktion, die in einem logischen Unterblock "Update" ($F_i^{(U)}$) implementiert und umgesetzt wird, zum Berechnen korrigierender Parameter $\delta\theta_i$, die auf den aktuellen Wert des intern gespeicherten Parameters $\theta i$ ausgehend von den Fehlern ($e_{i+1,0}$, $\cdots$ , $e_{i+1,m_{i+1}-1}$) anzuwenden sind, die durch den Unterblock $F_{i+1}^{(P)}$ zurückgegeben werden; wobei diese Funktion allgemein in der Form $\delta\theta_i$ = update($e_{i+1,0}$, $\cdots$ , $e_{i+1,m_i+1-1}$) geschrieben wird.

2. Verfahren nach Anspruch 1, **dadurch gekennzeichnet, dass** jedes Neuron ($F_i$) mindestens eine Implementierung und eine Umsetzung einer Folge elementarer Verarbeitungen der Form umfasst:

- der Unterblock $F_i^{(N)}$ führt ($X_{i+1,0}$, $\cdots$, $X_{i+1,m_{i+1}-1}$) = next($X_{i,0}, ....,X_{i,mi-1}$), $X_{ij} \in K^{q_{ij}}$ durch, wobei $q_{ij}$ eine ganze Zahl und $K$ der Raum der reellen Zahlen oder der Raum der komplexen Zahlen ist
- der Unterblock $F_i^{(p)}$ führt ($e_{i,0},\cdots,e_{i,mi-1}$) = propagate ($e_{i+1,0}$, $\cdots$ , $e_{i+1,m_{i+1}-1}$) durch
- der Unterblock $F_i^{(U)}$ führt $\delta\theta_i$ = update ($e_{i+1,0}$, $\cdots$ , $e_{i+1,m_{i+1}-1}$) durch

3. Verfahren nach einem der Ansprüche 1 bis 2, **dadurch gekennzeichnet, dass** das Hinzufügen der Nichtlinearität an dem Ausgang des letzten Blocks ($H_i^{(N)}$) des Netzes umgesetzt wird durch die Funktion:

$$z_j = NL(y_j),$$

wobei

- $z_j$ das ausgehende Signal eines Entscheidungsorgans des letzten Blocks ist
- $y_j$ ein entzerrter oder demodulierter Abtastwert ist
- der Entscheidungsblock durch den Vergleich des durch den Ausgang y des Phasenblocks erzielten Ergebnisses mit einer Endkonstellation möglicher Ergebnisse definiert ist, die durch den Entscheidungsblock gespeichert werden, und entscheidet, unter den möglichen Ergebnissen dasjenige zu nehmen, dessen Abstand zu dem repräsentativen Punkt des Ausgangs y der kleinste ist.

4. Verfahren nach Anspruch 1 bis 3, **dadurch gekennzeichnet, dass** die Rückpropagierung der berechneten Fehler durch die Verarbeitungen, die durch einen Fehlerrückpropagierungssalgorithmus implementiert und durchgeführt werden, erzielt wird, wie folgt:

- Initialisieren der Rückpropagierung in der Form für $0 \le k < N$, $e_{L,k} = \overline{z_k - y_k}$
- Propagieren des Fehlers durch das Unterneuron $F_i^{(P)}$ in der Funktion ($e_{i,0},\cdots,e_{i,mi-1}$) = propagate($e_{i+1,0}$, $\cdots$ , $e_{i+1,m_{i+1}-1}$) gemäß den Berechnungen

$$\forall 0 \leq j < m_i, \ e_{i,j} = \sum_k e_{i+1,k} \cdot \frac{\partial F_{i,k}}{\partial x_{i,j}}$$

**5.** Verfahren nach Anspruch 4, **dadurch gekennzeichnet, dass** das Aktualisieren der internen Parameter $\theta_i$ jedes Neurons $F_i$ in dem Unterneuron $F_i^{(U)}$ durch die Verarbeitungen erzielt wird, die in der Funktion $\delta\theta_i$ = update $(e_{i+1,0}, \cdots , e_{i+1,m_{i+1}-1})$ implementiert und umgesetzt werden gemäß:

o Berechnen von $\Delta_i$ :

■ für

$$0 \leq j < M_{i+1}, \ D_{i,j} = e_{i+1,j} \ \frac{\partial F_{i,j}^{(N)}}{\partial \theta_i}$$

■

$$\Delta_i = \sum_j \ D_{i,j}$$

∘ Aktualisieren von $\theta_i$:

■ $\theta_i \mathrel{+}= 2 \ \mu\mathfrak{R}(\Delta_i)$ , wenn $\theta_i$ in einem Vektorraum **R** liegt

■ $\theta_i \mathrel{+}= 2 \ \mu\Delta_i$, wenn $\theta_i$ in einem Vektorraum **C** liegt

wobei - $\mu_i$ ein reeller Parameter ist, der "Lerngeschwindigkeit" genannt wird

- $\delta\theta_i$ der Korrekturparameter des Parameters $\theta_i$ ist
- $D_{ij}$ eine Zwischenmenge von Hilfsberechnungen ist, die zwischengespeichert werden können.

**6.** Verfahren nach einem der Ansprüche 1 bis 5, **dadurch gekennzeichnet, dass** im Verlauf der Verarbeitung der Abtastwerte an dem Eingang des Systems durch die verschiedenen Unterblöcke die Werte der verschiedenen $\theta_i$, die willkürlich initialisiert werden, gegen Werte konvergieren, die die Demodulation wirksam machen.

**7.** Verfahren nach einem der Ansprüche 1 bis 6, **dadurch gekennzeichnet, dass** das spezialisierte neuronale Netz eine Folge von Blöcken eines Typs MIMO ("multi inputs, multi outputs") bildet.

**8.** Verfahren nach einem der Ansprüche 1 bis 7, **dadurch gekennzeichnet, dass** es ferner das Speichern jedes spezialisierten Neurons des Netzes durch mindestens einen Speicherpuffer der Vielzahl von Eingängen und in mindestens einem anderen Puffer der Vielzahl von Ausgängen umfasst.

**9.** Computerprogramm, umfassend computerausführbare Anweisungen, die, wenn sie ausgeführt werden, alle Schritte des Verfahrens nach einem der Ansprüche 1 bis 8 umsetzen.

## Claims

**1.** Method for real-time blind separation and demodulation of digital telecommunication signals, based on observing a sampled version of said signal and including parameters, in particular the equalization coefficients, the phase value ($\varphi$), the amplitude of the signal, their frequency and symbol time, said method comprising the following steps:

- acquiring, by sampling, a first plurality of the signal, each constituting an input of a network of L processing blocks ($G_i$, $F_i$, $H_i$) also herein referred to as "specialized neurons", each neuron being simulated by the outputs of the preceding block, the first plurality of the signal being submitted as an input to the first block simulating a first neuron of the network in order to generate a plurality of outputs of the first block; each neuron $F_i$ being simulated by the outputs of an upstream chain $G_i$ and stimulating a downstream chain $H_i$; each set of samples passes through the same processing chain;
- the outputs of the last network blocks ideally correspond to the demodulated symbols;
- adding a nonlinearity to each of the outputs of the last network block making it possible to calculate an error signal, and propagating said error in the opposite direction of the processing chain ("back-propagation");
- estimating, upon receipt of the error by each neuron (i), a corrective term $\delta\theta_i$ and updating the value of the parameter $\theta_i$ in each block according to $\theta_i \mathrel{+}= \delta\theta_i$;

said method **characterized in that** each neuron ($F_i$) of the network specifically performs:

- processing of a "Next" function, implemented and executed in a processing logic sub-block ($F_i^{(N)}$), to generate outputs from a plurality of observations of the digital telecommunication signal and transmit them to the processing logic sub-block ($H_i^{(N)}$) of the processing block of the next neuron of the network; this function is generally written as $(X_{i+1,0}, \cdots, X_{i+1,m_{i+1}-1}) = \text{next}(X_{i,0}, ..., X_{i,m_i-1})$ where $m_i$ represents the number of inputs and $m_{i+1}$ represents the output number of $F_i^{(N)}$ which corresponds to the number of inputs of $F_{i+1}^{(N)}$;

- processing of a "Propagate" function, implemented and executed in a "Propagate" logic sub-block ($F_i^{(P)}$), to calculate errors $(e_{i+1,0}, ... , e_{i+1,m_{i+1}-1})$ provided by the block $F_{i+1}^{(P)}$ or by $(e_{L-1,0}, \cdots, e_{L-1,N-1}) = (e_0, \cdots e_{N-1})$ with $e_j = \overline{z_J - y_J}$ at the end of the chain, namely the input $F_{L-1}^{(P)}$; for the i-th neuron, this function is generally written as $(e_{i,0}, \cdots, e_{i,m_i-1}) = \text{propagate}(e_{i+1,0}, \cdots, e_{i+1,m_{i+1}-1})$

- processing of an "Update" function, implemented and executed in an "Update" logic sub-block ($F_i^{(U)}$), to calculate corrective parameters $\delta\theta_i$ to be applied to the current value of the internally stored parameter $\theta_i$ from the errors $(e_{i+1,0}, \cdots, e_{i+1,m_{i+1}-1})$ returned by the sub-block $F_i^{(U)}$; this function is generally written as $\delta\theta_i = \text{update}(e_{i+1,0}, \cdots, e_{i+1,m_{i+1}-1})$.

2. Method according to claim 1, **characterized in that** each neuron ($F_i$) comprises at least one implementation and execution of a sequence of elementary processing operations in the following form:

- the sub-block $F_i^{(N)}$ performs $(X_{i+1,0}, ..., X_{i+1,m_{i+1}-1}) = \text{next}(X_{i,0}, ..., X_{i,m_i-1})$, $X_{ij} \in K^{q_{ij}}$ where $q_{ij}$ is an integer and $K$ is the space for real numbers or for complex numbers
- the sub-block $F_i^{(p)}$ performs $(e_{i,0}, ..., e_{i,m_i-1}) = \text{propagate}(e_{i+1,0}, ..., e_{i+1,m_{i+1}-1})$
- the sub-block $F_i^{(U)}$ performs $\delta\theta_i = \text{update}(e_{i+1,0}, ..., e_{i+1,m_{i+1}-1})$

3. Method according to either of claims 1 to 2, **characterized in that** the addition of the nonlinearity to the output of the last block ($H_i^{(N)}$) of the network is executed by the function:

$$z_j = \text{NL}(y_j)$$

wherein

- $z_j$ is the signal output from a decision-making element of the last block
- $y_j$ is an equalized or demodulated sample
- the decision-making block being defined by comparing the result obtained by the output y of the phase block with a finite constellation of possible results stored by the decision-making block, and deciding to select from the possible results the result having the smallest distance from the point representative of the output y.

4. Method according to claim 1 to 3, **characterized in that** the back-propagation of the calculated errors is obtained by the following processing operations, implemented and executed by an algorithm for back-propagation of the error:

- Initializing the back-propagation in the form for $0 \le k < N$, $e_{L,k} = \overline{z_J - y_J}$

- propagating the error via the sub-neuron $F_i^{(P)}$ in the function $(e_{i,0}, ..., e_{i,m_i-1}) = \text{propagate}(e_{i+1,0}, ..., e_{i+1,m_{i+1}-1})$

$$\forall 0 \leq j < m_i, e_{i,j} = \sum_k e_{i+1,k} \cdot \frac{\partial F_{i,k}}{\partial x_{i,j}}$$

according to the calculations

5. Method according to claim 4, **characterized in that** updating the internal parameters $\theta_i$ of each neuron $F_i$ is obtained in the sub-neuron $F_i^{(U)}$ by the processing operations implemented and executed in the function $\delta\theta_i = \text{update}(e_{i+1,0}, ..., e_{i+1,m_{i+1}-1})$ according to:

○ Calculating $\Delta_i$:

■ For

$$0 \leq j < M_{i+1}, D_{i,j} = e_{i+1,j} \cdot \frac{\partial F_{i,j}^{(N)}}{\partial \theta_i}$$

■

$$\Delta_i = \sum_j D_{i,j}$$

○ Updating $\theta_i$:

■ $\theta_i \mathrel{+}= 2\,\mu\Re\,(\Delta_i)$ if $\theta_i$ is in an **R** vector space

■ $\theta_i \mathrel{+}= 2\,\mu\Delta_i$ if $\theta_i$ is in a **C** vector space

Where

- $\mu_i$ is a real parameter referred to as "learning speed"
- $\delta\theta_i$ is the corrective parameter of the parameter $\theta_i$
- $D_{ij}$ is an intermediate quantity of auxiliary calculations that can be temporarily stored.

6. Method according to any one of claims 1 to 5, **characterized in that** in the course of the processing of the samples input into the system by the different sub-blocks, the values of the different $\theta_i$, initialized arbitrarily, converge around values which render the demodulation effective.

7. Method according to any one of claims 1 to 6, **characterized in that** the network of specialized neurons constitutes a sequence of MIMO ("multi inputs, multi outputs") blocks.

8. Method according to any one of claims 1 to 7, **characterized in that** it further comprises storing by at least one buffer memory of the plurality of inputs and, in at least one other buffer, of the plurality of outputs of each specialized neuron of the network.

9. Computer program comprising instructions executable by a computer which, when executed, implement all steps of the method according to any one of claims 1 to 8.

**Figure 1**

**Figure 2**

Figure 3

Figure 4

**Figure 5**

## RÉFÉRENCES CITÉES DANS LA DESCRIPTION

**Documents brevets cités dans la description**

- FR 3030964

- US 8605828 B

**Littérature non-brevet citée dans la description**

- **JOHN R TREICHLER.** *Practical Blind Demodulators for High-Order QAM signais*

- **TREICHLER J R.** *Pratical Implementations of Blind demodulators*